(19) Europäisches Patentamt
European Patent Office
Office européen des brevets

(11) Veröffentlichungsnummer: **0 211 323**
**A2**

(12) # EUROPÄISCHE PATENTANMELDUNG

(21) Anmeldenummer: 86110090.7

(22) Anmeldetag: 23.07.86

(51) Int. Cl.⁴: C 09 D 11/02
C 09 B 47/04

(30) Priorität: 08.08.85 DE 3528423
09.01.86 DE 3600348

(43) Veröffentlichungstag der Anmeldung: 25.02.87 Patentblatt 87/9

(84) Benannte Vertragsstaaten: CH DE FR GB LI

(71) Anmelder: BAYER AG
Konzernverwaltung RP Patentabteilung
D-5090 Leverkusen 1 Bayerwerk(DE)

(72) Erfinder: Lorenz, Manfred, Dr.
Roggendorfstrasse 51
D-5000 Köln 80(DE)

(72) Erfinder: Groll, Manfred, Dr.
Paul-Klee-Strasse 68c
D-5090 Leverkusen 1(DE)

(72) Erfinder: Haus, Artur, Dr.
Zum Eschental 8
D-5063 Overath(DE)

(54) **Herstellung von Illustrationstiefdruckfarben.**

(57) Verfahren zur Herstellung von Illustrationstiefdruckfarben, dadurch gekennzeichnet, daß man Phthalocyanin farbstoffe der Formel

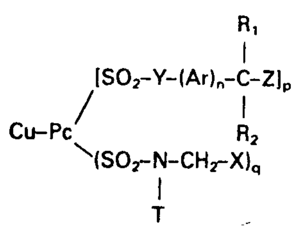

I

in der $R_1$, $R_2$, T, X, Y, Z, Ar, n, p und q die in der Beschreibung angegebenen Bedeutungen haben, verwendet.

EP 0 211 323 A2

BAYER AKTIENGESELLSCHAFT 5090 Leverkusen, Bayerwerk
Konzernverwaltung RP
Patentabteilung PG/Ke-c

## Herstellung von Illustrationstiefdruckfarben

Die Erfindung betrifft ein Verfahren zur Herstellung von Illustrationstiefdruckfarben unter Verwendung von Phthalocyaninfarbstoffen.

Bei Illustrationstiefdruckfarben, die z.B. zum Bedrucken von illustrierten Zeitschriften und Versandkatalogen dienen, handelt es sich um niedrigviskose Flüssigkeiten, die vorzugsweise aus 5 bis 10 % Pigment, 25 bis 40 % Harz und Lösungsmittel bestehen (siehe Ullmanns Encyklopädie der technischen Chemie, 4. Auflage, Band 10. S. 196; Verlag Chemie, Weinheim 1973). Diese Tiefdruckfarben trocknen durch Verdunsten der Lösungsmittel, wobei das Harz und das Pigment auf dem Druckträger zurückbleiben. Es ist wichtig, daß dabei das Pigment möglichst auf der Oberfläche des Druckträgers verbleibt, da ein zu tiefes Eindringen des farbgebenden Mittels in den Druckträger zu einer Verminderung der scheinbaren Farbintensität führt. Beim Bedrucken von dünnen und ungestrichenen Papieren kann es durch zu tiefes Eindringen des farbgebenden Mittels sogar zu einem Durchschlagen bis auf die Rückseite des

Papiers kommen, wodurch sowohl Farbstärke als auch Glanz beeinträchtigt werden und außerdem ein sauberes Bedrucken der Rückseite erschwert wird. Durch Verwendung von Spezialpigmenten bei der Herstellung von Illustrationstiefdruckfarben werden bedingt durch die Filterwirkung des saugfähigen Untergrunds die Pigmentteilchen auf oder nahe der Oberfläche zurückgehalten, wobei jedoch wegen der niedrigen Viskosität der Druckfarben und das dadurch bedingte rasche Eindringen auch hier Durchschlagserscheinungen auftreten können. Um so mehr ist mit diesen Schwierigkeiten zu rechnen, wenn man anstelle von Pigmenten lösliche Farbstoffe bei der Herstellung von Illustrationstiefdruckfarben verwendet. Da hierbei die Filterwirkung des Druckträgers entfällt, kann der lösliche Farbstoff besonders leicht und tief eindringen. Dies ist der Grund dafür, daß bisher lösliche Farbmittel beim Illustrationstiefdruckverfahren nur sehr beschränkt Verwendung gefunden haben, z.B. als sogenannte Schönungsfarbstoffe zusammen mit einem überwiegenden Anteil an Pigmenten. Eine größere Menge an löslichen Farbstoffen würde insbesondere auf dünnen und saugfähigen Papieren das Durchschlagen und Durchscheinen verursachen.

Es wurde nun überraschenderweise gefunden, daß sich auch Phthalocyaninfarbstoffe der Formel

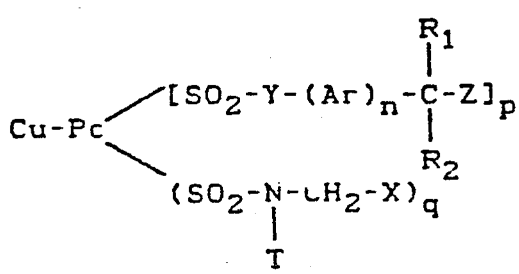

I

in der

Cu-Pc Kupferphthalocanin

Y $-\underset{T}{N}-$, $-\underset{T'}{N}-$, -O-,

Z für den Fall, daß Y = -O- ist, einen gegebenenfalls substituierten Kohlenwasserstoffrest mit 1 bis 20 C-Atomen, und für den Fall, daß Y = $-\underset{T}{N}-$ oder $-\underset{T'}{N}-$ ist, einen gegebenenfalls substituierten aliphatischen Rest mit 1 bis 20 C-Atomen, wobei die für Z genannten Reste frei von wasserlöslich machenden Gruppen, insbesondere frei von Carboxylat- und Sulfonatgruppen sind und ihre Kohlenstoffkette durch -O-, -O-CO-, -NH-CO-, $-NH-SO_2-$ unterbrochen sein kann,

Ar einen Arylenrest,

T,T' Wasserstoff, $C_1$-$C_4$-Alkyl, Hydroxy-$C_1$-$C_4$-alkyl,

X einen gegebenenfalls substituierten aliphatischen Rest mit 1 bis 20 C-Atomen, der frei von wasserlöslich machenden Gruppen, insbesondere frei von Carboxylat- und Sulfonatgruppen ist, und dessen Kohlenstoffkette durch -O-, -O-CO-, -NH-CO-, $-NH-SO_2-$ unterbrochen sein kann,

p 2 bis 4, vorzugsweise 2 oder 3, bzw. 2 bis 3,

n, q 0 bis 1,

$R_1$, $R_2$ Wasserstoff, Methyl, Ethyl bezeichnen, mit der Maßgabe, daß, falls Y für $-\underset{T}{N}-$ oder $-\underset{T'}{N}-$ steht und

n = 0 ist, $R_1$ = $R_2$ = Wasserstoff sein müssen,

zur Herstellung von Illustrationstiefdruckfarben eignen.

Überraschenderweise zeigen die Farbstoffe der Formel I nur geringe Durchschlagsneigung und zeigen weiterhin eine höhere Farbstärke als die üblicherweise verwendeten Pigmente.

Ar bezeichnet vorzugsweise einen Phenylenrest.

Beim Kohlenwasserstoffrest Z handelt es sich bevorzugt um einen Alkyl- wie $C_1$-$C_{20}$-Alkyl-, Alkenyl- wie $C_2$-$C_{20}$ Alkenyl-, Cycloalkyl-, wie $C_3$-$C_7$-Cycloalkyl-, Aryl- wie Phenyl- und Naphthyl-, Aralkyl- wie Phenyl-$C_1$-$C_4$-alkyl- und Naphthyl-$C_1$-$C_4$-alkyl-Rest.

Bei den aliphatischen Resten Z und X handelt es sich bevorzugt um Alkyl- wie $C_1$-$C_{20}$-Alkyl-, Alkenyl- wie $C_2$-$C_{20}$-Alkenyl- und Cycloalkyl- wie $C_3$-$C_7$-Cycloalkyl-Reste.

Die Alkyl-, Alkenyl- und Cycloalkyl-Reste X, Z können beispielsweise durch $C_1$-$C_6$-Alkoxy substituiert sein; die Aryl- und Aralkylreste Z können beispielsweise am aromatischen Ring durch $C_1$-$C_6$-Alkyl, $C_1$-$C_6$-Alkoxy, -OH und Halogen wie F, Cl, Br, substituiert sein.

Vorzugsweise eingesetzt werden folgende Verbindungen:

0211323

Verbindungen der Formel:

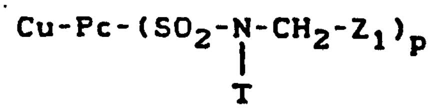

II

in der Cu-Pc, T und p die zu Formel I angegebenen Bedeutungen haben und

$Z_1$ $C_6$-$C_{20}$-Alkyl bezeichnet.

Verbindungen der Formel:

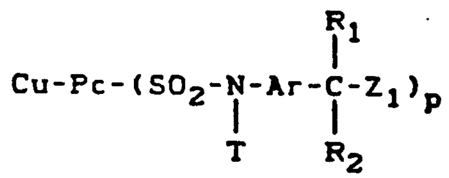

III

in der

Cu-Pc, T, Ar, $R_1$, $R_2$ und p die zu Formel I angegebenen Bedeutungen haben und

$Z_1$ $C_6$-$C_{20}$-Alkyl bezeichnet.

Verbindungen der Formel:

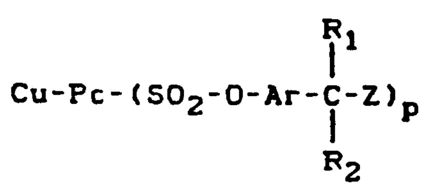

IV

in der

Cu-Pc, Ar, $R_1$, $R_2$, Z und p die zu Formel I angegebenen Bedeutungen haben.

Verbindungen der Formel:

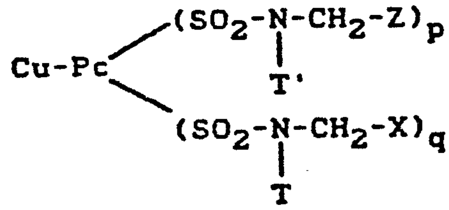

(V)

in der

Cu-Pc, T, T', X, Z, p und q die zu Formel I angegebenen Bedeutungen haben.

Weitere bevorzugte Verbindungen entsprechen den Formeln:

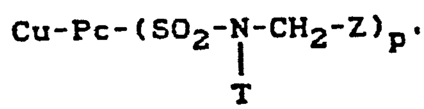

(VI)

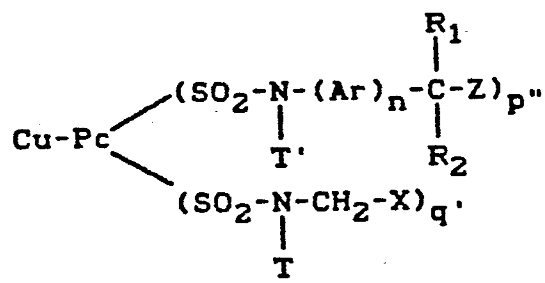

(VII)

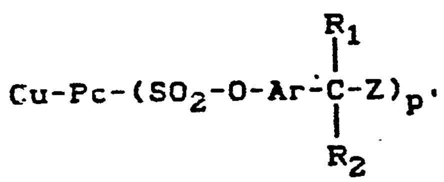

(VIII)

bei denen

Cu-Pc, T, Ar, n, $R_1$, $R_2$, X und Z die zu Formel I angegebenen Bedeutungen haben und

p' 2 oder 3, bzw. 2-3,
p" 2-2,8 und
q' 0,2-1 bezeichnen.

In den Formeln II bis VIII bedeuten $Z_1$ und Z z.B. Hexyl, Heptyl, Octyl, Nonyl, Decyl, Dodecyl, Octadecyl.

Die Herstellung der Farbstoffe der Formel I ist z.B. aus den Patentveröffentlichungen DE-OS 2 025 480, DE-OS 2 224 063, DE-OS 2 244 262, DE-OS 2 301 479, DE-OS 2 434 215, CH 364 573, JP 7 323 665, JP 67 059 586, FR 1 347 550 und FR 1 560 478 bekannt oder die Farbstoffe können in Analogie zu literaturbekannten Verfahren hergestellt werden.

Die unter Verwendung der Farbstoffe der Formel I hergestellten Illustrationstiefdruckfarben enthalten bezogen auf das Gewicht der Komponenten A), B) und C), vorzugsweise

A) etwa 2 bis etwa 20 Gew.-% Farbmittel,
B) etwa 10 bis etwa 40 Gew.-% Harz und
C) etwa 80 bis etwa 50 Gew.-% Lösungsmittel.

Das Farbmittel kann auch ein Gemisch verschiedener Farbstoffe der Formel I sowie insbesondere auch ein Gemisch aus mindestens einem Farbstoff der Formel I und mindestens einem für Illustrationstiefdruckfarben geeigneten Pigment sein. Die letztgenannten Mischungen können bis zu 90 Gew.-% bevorzugt bis zu 50 Gew.-% Pigment enthalten.

Bei Pigmenten, die sich zur Herstellung von Mischungen der genannten Phthalocyaninfarbstoffe mit Pigmenten eignen, handelt es sich bevorzugt um Blaupigmente wie C.I. Pigment Blue 15 und 27. Daneben kommen zur Erzeugung von besonderen Nuancen auch Mischungen mit Pigmenten mit anderem Farbton infrage, z.B. C.I. Pigment Yellow 12, 13, 14, 17, 74 und 83, C.I. Pigment Orange 5 und 34, C.I. Pigment Red 2, 53, 57:1, 112, 122, 146 und 148, C.I. Pigment Violet 19, C.I. Pigment Green 7 und 36 sowie C.I. Pigment Black 7. Die Phthalocyaninfarbstoffe können auch zum Nuancieren der genannten Pigmente verwendet werden.

Geeignete Harze sind z.B. Gilsonite-Asphalt, kolophoniummodifizierte Harze, z.B. Kalk-, Zink- und Magnesiumsalze von Harzsäuren und ihren Umwandlungsprodukten, Harzester, Maleinatharze, kolophoniummodifizierte Phenolharze, Kohlenwasserstoffharze, Ketonharze, Chlorkautschuk, Nitrocellulose, Polyamidharze, Schellack, Vinylharze u.a.

Geeignete Typen werden z.B. in Karsten, Lackrohstofftabellen, 7. Aufl., Curt R. Vincentz Verlag, aufgeführt.

Als Lösungsmittel kommen aromatische und aliphatische Kohlenwasserstoffe wie Leichtbenzinsorten, $C_5$-$C_8$-aliphatische Kohlenwasserstoffe, Xylol und besonders bevorzugt Toluol in Betracht. Es können auch Mischungen von aliphatischen und aromatischen Kohlenwasserstoffen eingesetzt werden.

Die vorliegende Erfindung betrifft bevorzugt die Verwendung von Farbstoffen der Formel I bei der Herstellung von Illustrationstiefdruckfarben auf Toluolbasis.

Zur Herstellung der Illustrationstiefdruckfarben werden die Farbstoffe der Formel I, gegebenenfalls im Gemisch mit Pigmenten, in üblicher Weise in die Druckfarbenansätze eingearbeitet.

Vorteilhafterweise können beim erfindungsgemäßen Verfahren zur Herstellung von Illustrationstiefdruckfarben dem Farbstoff der Formel I feindisperse anorganische Zuschlagstoffe mit einer spezifischen Oberfläche nach BET von mindestens 50 $m^2/g$, bevorzugt mindestens 100 $m^2/g$, besonders bevorzugt mindestens 200 $m^2/g$ zugesetzt werden.

Als Zuschlagstoffe haben sich insbesondere Aluminiumhydroxide und ganz besonders Kieselsäure bewährt. Die Zuschlagstoffe werden vorzugsweise in Mengen von 0,2 bis 2 Gew.-%, bezogen auf das Druckfarbengewicht, besonders bevorzugt 0,4 bis 0,9 Gew.-% eingesetzt.

Durch diese Zusätze gelingt es, die Durchschlagsneigung der Farbstoffe weiter zu verringern, wobei Ergebnisse erzielt werden, wie sie sonst nur bei der alleinigen Verwendung von Pigmenten erreicht werden können.

Bei den vorzugsweise eingesetzten feindispersen Kieselsäuren handelt es sich um überwiegend amorphe, mehr oder weniger vernetzte, feinteilige Kieselsäuren mit den o.a. spezifischen Oberflächen. Solche Kieselsäuren sind z.B. aus Ullmanns Encyklopädie der technischen Chemie, 4. Auflage, Band 21, S. 451-476 bekannt. Die Kieselsäuren können z.B. durch Fällung aus Lösungen oder nach pyrogenen Verfahren erhalten werden; sie können neben überwiegend Kieselsäure auch noch andere Metalloxide und -hydroxide enthalten, z.B. solche des Aluminiums und Titans.

Die Kieselsäuren müssen in der Tiefdruckfarbe dispergiert sein. Diese Dispergierung kann in der fertigen Tiefdruckfarbe oder in einem Konzentrat erfolgen. Es ist jedoch auch möglich, zunächst eine Dispersion in dem für die Tiefdruckfarbe verwendeten Lösungsmittel gegebenenfalls auch in höherer Konzentration herzustellen, wobei man bereits einen Teil oder auch das gesamte Harz zusetzen kann. Geeignete Dispergieraggregate sind z.B.: Rührer, Schnellrührer, Dissolver, Perlmühlen und Kugelmühlen oder eine Kombination dieser Aggregate.

Weiterhin kann es vorteilhaft sein, zusätzlich zu den Kieselsäuren noch Netz- und Dispergiermittel für diese zuzusetzen. Besonders geeignete Dispergiermittel sind die Salze starker organophiler Säuren mit aliphatischen Aminen und Polyaminen, die gegebenenfalls Hydroxylgruppen enthalten.

Starke orgamophile Säuren sind z.B.: $C_{10}$-$C_{20}$-Alkansulfonsäuren, Alkylarylsulfonsäuren wie Dodecylbenzolsulfonsäure, Di-tert.-butylnaphthalinsulfonsäuren, Schwefelsäuremonoester oder Phosphorsäuremono- oder -diester von Alkanolen oder deren Umsetzungsprodukte mit Ethylenoxid. Solche Alkanole sind z.B. gesättigte oder ungesättigte, geradkettige oder verzweigte $C_4$-$C_{22}$-aliphatische Alkohole wie Butanol, 2-Ethylhexanol, Dodecanol, Tetra-, Hexa- und Octadecylalkohol, Oleylalkohol sowie die Umsetzungsprodukte dieser Alkohole mit 1 bis 20 mol Ethylen- oder Propylenoxid.

Geeignete aliphatische Amine sind z.B.: Ethylendiamin, Amine der Formel $H_2N(CH_2CH_2NH)_nH$, mit n = 2-6, Propylendiamin, Dipropylendiamin, Talgfettpropylendiamin. Als hydroxylgruppenhaltige Amine kommen z.B. solche infrage, wie sie bei der Umsetzung von Ammoniak oder $C_1$-$C_{20}$-Alkylmono-, -di- oder -polyaminen mit Ethylen- oder Propylenoxid oder mit Epichlorhydrin entstehen.

Beispiele hierfür sind: Ethanolamin, Di- und Triethanolamin, Tris-[2-(2-hydroxyethoxy)-ethyl]-amin, Bis-(2-hydroxyehyl)-methyl-, -ethyl-, -propyl- oder -butylamin, 2-(2-Aminoethylamino)-ethanol, 2-Hydroxyethyl)-bis-(2-hydroxypropyl)-amin, Tris-(2-hydroxypropyl)-amin, 3-[Bis-(2-hydroxyethyl)amino]-propylamin, Pentahydroxyethyl-diethylentriamin, 2,3-Dihydroxypropylamin; die Umsetzungsprodukte von Kokosfettamin, Talgfettamin, Stearylamin und Oleylamin mit 2 mol Ethylenoxid oder von Talgfettpropylendiamin mit 3 mol Ethylenoxid.

Diese Dispergiermittel werden in Mengen zwischen 10 und 200 Gew.-%, bevorzugt 50 und 100 Gew.-%, bezogen auf die Kieselsäure zugesetzt.

Als weitere feindisperse Zusatzstoffe kommen z.B. feindisperse Aluminiumhydroxide oder die weitgehend röntgenamorphen Aluminiumhydroxidgele infrage, wie sie z.B. durch Fällen aus sauren Aluminiumsalzlösungen mit Basen oder nach dem Verfahren der Flammenhydrolyse erhalten werden können. Bevorzugte Aluminiumhydroxide habn eine spezifische Oberfläche nach BET von wenigstens ca. 50 $m^2/g$. Sie können auf gleiche Weise und unter Zusatz der gleichen Dispergiermittel dispergiert werden wie es vorstehend für die Kieselsäuren beschrieben wurde. Auch Mischungen aus feindispersen Aluminiumhydroxiden und Kieselsäuren können erfindungsgemäß verwendet werden.

Das Eindringen bzw. Durchschlagen einer Druckfarbe kann man prüfen, indem man das Durchscheinen oder Durchschlagen eines Druckes oder Aufstriches der Druckfarbe auf dem Bedruckstoff z.B. einem Druckpapier von der Rückseite visuell oder farbmetrisch beurteilt.

Das Durchschlagen fällt besonders ins Gewicht bei den zunehmend verwendete, preiswerten Papierqualitäten mit einem Papiergewicht von 42 $g/m^2$ oder weniger.

Beispiel 1

57,5 g Kupferphthalocyanin werden in 308 g Chlorsulfonsäure so lange bei 108 bis 110°C gerührt bis im Mittel 2,8 Sulfonsäure- oder Sulfonsäurechlorid-Gruppen in das Phthalocyanin-Molekül eingetreten sind. Anschließend werden bei 85°C allmählich 60 g Thionylchlorid eingerührt und so lange bei 90°C nachgerührt bis alle Sulfonsäure-Gruppen in Sulfonsäurechlorid-Gruppen übergeführt sind. Nach dem Abkühlen wird die Schmelze auf Eis ausgetragen, das Kupferphthalocyaninsulfonsäurechlorid abgesaugt und mit Eiswasser gewaschen.

Die erhaltene Paste wird in eine Lösung von 85 g Dodecylamin in 350 g Diethylenglykolmonoethylether eingerührt. Mit Hilfe von verdünnter Natronlauge hält man den pH-Wert der Reaktionsmischung bis zur Beendigung der Reaktion auf 9,5 bis 10. Zur Aufarbeitung wird mit Methanol verdünnt, abgesaugt, mit Wasser ausgerührt, wieder abgesaugt und getrocknet. Man erhält 114 g des Farbstoffes der Formel

$$Cu\text{-}Pc\text{-}(3)\text{-}(SO_2NH\text{-}C_{12}\text{-}H_{25})_{2,8}$$

der eine hervorragende Löslichkeit in Toluol besitzt.

6 g des obigen Farbstoffes werden zusammen mit 26 g Erkazit 899, einem Calciumresinat der Firma Lackharzwerke Robert Krämer, in 68 g Toluol gelöst. Man erhält eine Toluol-Tiefdruckfarbe mit einer Viskosität, die einer Auslaufzeit von 23 Sekunden im DIN 3 Becher nach DIN 53 211 entspricht. Mit dieser Druckfarbe werden auf einem

Dürner Tiefdruck Handandruckgerät Tiefdruckpapiere bedruckt, wobei farbstarke türkisblaue Drucke erhalten werden. Beim Beurteilen dieser Drucke zeigt sich, daß die Druckfarbe bereits ein recht gutes Durchschlagverhalten aufweist. Lediglich auf sehr leichten Papieren wird ein gegenüber ausschließlich mit Hilfe von Pigmenten hergestellen Druckfarben gleicher Viskosität ein etwas schlechteres Durchschlagverhalten gefunden.

Zu Toluol-Tiefdruckfarben mit ähnlichen Eigenschaften gelangt man, wenn man anstelle des obengenannten Farbstoffes die Farbstoffe einsetzt, die man erhält, wenn man die in der Spalte 2 der nachfolgenden Tabelle genannten Kupferphthalocyaninsulfonsäurechloride mit den in Spalte 3 genannten Aminen umsetzt. Bei der Herstellung der Toluol-Druckfarben muß man, um die gewünschte Viskosität von 23 Sekunden im DIN 3 Becher nach DIN 53 211 zu erhalten, die Mengenverhältnisse zwischen dem Erkazit-Harz und Toluol etwas variieren.

Tabelle 1

| Beispiel 1 | Cu-Pc-sulfonsäurechlorid | Amin | Farbton |
|---|---|---|---|
| a) | $Cu-Pc-(3)-SO_2Cl)_{2,4}$ | 2-Ethylhexylamin | türkis |
| b) | " | Oleylamin | " |
| c) | $Cu-Pc-(3)-SO_2Cl)_{2,8}$ | Dodecylamin | " |
| d) | " | 2-Ethylhexylamin | " |
| e) | " | Oleylamin | " |
| f) | " | N-Methylstearylamin | " |
| g) | " | 3-Amino-5-methyl-1-phenylhexan | " |
| h) | " | 2'-Ethylhexoxypropylamin | " |
| i) | $Cu-Pc-(3)-SO_2Cl)_{3,3}$ | Dodecylamin | " |
| k) | " | Oleylamin | " |
| l) | $Cu-Pc-(3)-SO_2Cl)_{2,1}$ | 3-Amino-5-methyl-1-phenylhexan | " |
| m) | " | 2-Ethylhexylamin | " |
| n) | $Cu-Pc-(3)-SO_2Cl)_{2,8}$ | Dodecylanilin | grünstichiges türkis |

Beispiel 2

6 g des Farbstoffes, den man nach Beispiel 1, Absatz 2 erhält, werden zusammen mit 25,2 g Erkazit 899, einem Calciumresinat der Firma Lackharzwerke Robert Krämer, in 68 g Toluol gelöst. In diese Lösung werden 0,8 g Aerosil 380, einer fein dispersen Kieselsäure der Firma Degussa eingerührt und auf mechanische Weise (z.B. in einem Red Devil) fein dispergiert. Die Druckfarbe entspricht in ihren Eigenschaften weitgehend der Druckfarbe, die nach Beispiel 1 erhalten wurde, zeigt jedoch beim Bedrucken von Papieren mit niedrigem Flächengewicht ein noch besseres Durchschlagsverhalten.

Anstelle von Aerosil 380 können auch Aerosil 300, Aerosil 200 oder HDKT 40, eine fein disperse Kieselsäure der Firma Wacker Chemie, eingesetzt werden. Die genannten Kieselsäuren haben spezifische Oberflächen nach BET von 380, 300, 200 bzw. 400 $m^2/g$.

Auch die in Beispiel 1, Tabelle 1 genannten Türkisfarbstoffe können wie in Absatz 1 beschrieben in Toluol-Tiefdruckfarben übergeführt werden, die im Druck ein gutes Durchschlagsverhalten aufweisen, wobei je nach Löslichkeit des Farbstoffes die Mengen von Erkazit 899 und Toluol etwas variiert werden müssen.

Beispiel 3

57,5 g Kupferphthalocyanin werden in 308 g Chlorsulfonsäure so lange bei 108 bis 110°C gerührt bis im Mittel 3 Sulfonsäure- oder Sulfonsäurechlorid-Gruppen in das Phthalocyanin-Molekül eingetreten sind. Anschließend werden bei 85°C allmählich 60 g Thionylchlorid eingerührt und so lange bei 90°C nachgerührt bis alle Sulfonsäure-Gruppen in Sulfonsäurechlorid-Gruppen übergeführt sind. Nach dem Abkühlen wird die Schmelze auf Eis ausgetragen, das Kupferphthalocyaninsulfonsäurechlorid abgesaugt und mit Eiswasser gewaschen.

Die erhaltene Paste wird in eine Lösung von 85 g 2-Phenyl-2-(4-hydroxyphenyl)-propan, 16 g Natriumhydroxyd und 800 g Wasser gegeben. Man steigert die Temperatur des Reaktionsgemisches auf 25°C, rührt einige Stunden bei dieser Temperatur und zur Vervollständigung des Umsatzes noch einige Zeit bei 45 bis 50°C. Nach dem Abkühlen wird das Reaktionsprodukt abgesaugt, mit Wasser, Methanol und nochmals mit Wasser gewaschen und getrocknet. Man erhält in nahezu quantitativer Ausbeute den türkisblauen Farbstoff der Formel

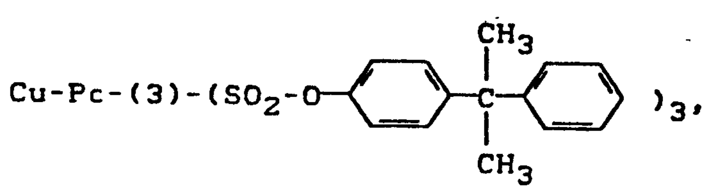

der eine hervorragende Löslichkeit in Toluol besitzt.

6 g des obigen Farbstoffes werden zusammen mit 29 g Erkazit 899, einem Calciumresinat der Firma Lackharzwerke Robert Krämer in 65 g Toluol gelöst. Man erhält eine Toluol-Tiefdruckfarbe mit einer Viskosität, die einer Auslaufzeit von 23 Sekunden im DIN 3 Becher nach DIN 53 211 entspricht. Mit dieser Druckfarbe werden auf einem Dürner Tiefdruck Handdruckgerät Tiefdruckpapiere bedruckt, wobei farbstarke türkisblaue Drucke erhalten werden. Die Druckfarbe weist bereits ein recht gutes Durchschlagsverhalten auf. Lediglich auf leichten Papieren wird ein gegenüber ausschließlich mit Hilfe von Pigmenten hergestellten Druckfarben gleicher Viskosität ein etwas schlechteres Durchschlagsverhalten gefunden.

Das Durchschlagsverhalten der Druckfarbe kann verbessert werden, wenn man der Druckfarbe, wie in Beispiel 2 beschrieben, 0,8 g Aerosil 380, eine feindisperse Kieselsäure der Firma Degussa, zusetzt und in der Farbstofflösung fein dispergiert. Anstelle von Aerosil 380 können auch Aerosil 300, Aerosil 200 oder HDKT 40, eine fein disperse Kieselsäure der Firma Wacker Chemie, eingesetzt werden.

Mit ähnlichem Erfolg kann man den in Absatz 2 genannten Farbstoff durch die Farbstoffe ersetzen, die man erhält, wenn man die in Spalte 2 der nachfolgenden Tabelle genannten Kupferphthalocyaninsulfonsäurechloride mit den in Spalte 3 genannten Phenolen umsetzt. Bei der Herstellung der Toluol-Druckfarben muß man, um die gewünschte Viskosität von 23 Sekunden im DIN 3 Becher nach DIN 53 211 zu erhalten, gegebenenfalls die Mengenverhältnisse zwischen dem Erkazit-Harz und Toluol etwas variieren.

Tabelle 2

| Beispiel 1 | Cu-Pc-sulfonsäurechlorid | Phenol | Farbton |
|---|---|---|---|
| a) | $Cu-Pc-(3)-SO_2Cl)_3$ | 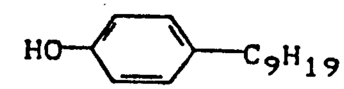 | türkisblau |
| b) | $Cu-Pc-(3)-SO_2Cl)_{2,4}$ | 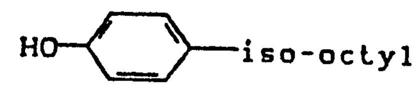 | türkisblau |
| c) | $Cu-Pc-(3)-SO_2Cl)_{2,4}$ | 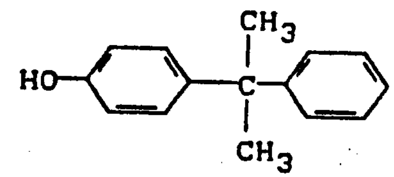 | türkisblau |
| d) | $Cu-Pc-(3)-SO_2Cl)_{2,9}$ | 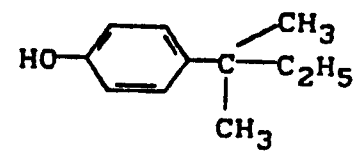 | türkisblau |
| e) | $Cu-Pc-(3)-SO_2Cl)_3$ | 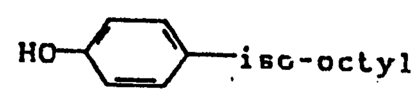 | türkisblau |

Beispiel 4

21,8 g des Kupferphthalocyaninsulfonsäureamid-Derivates, das man erhält, wenn man das nach Beispiel 3, Absatz 1 erhaltene Kupferphthalocyaninsulfonsäurechlorid mit 7,5 g Propanolamin und 26 g 2-Ethylhexylamin unter Verwendung von Natriumhydroxyd als säurebindendes Mittel umsetzt, werden in 40 g Toluol zusammen mit 5,6 g Ölsäure und 0,1 g Methansulfonsäure zum Sieden erhitzt. Das sich bildende Veresterungswasser wird mit Hilfe eines Wasserabscheiders abgetrennt und dabei das Toluol so weit abdestilliert, daß ein Siedepunkt von 120° C bis 130° C erreicht wird. Man läßt 8 Stunden bei dieser Temperatur reagieren, kühlt ab und versetzt das Reaktionsgemisch mit Methanol, saugt ab, wäscht kurz mit Methanol und trocknet. Der erhaltene türkisblaue Farbstoff entspricht im wesentlichen der Formel

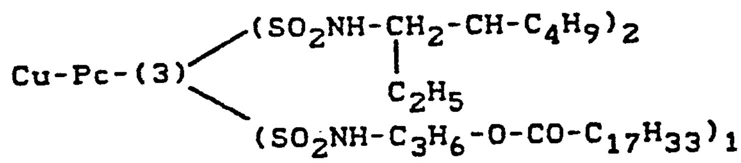

und hat eine gute Löslichkeit in Toluol.

7 g des obigen Farbstoffes werden zusammen mit 25 g Erkazit 899, einem Calciumresinat der Firma Lackharzwerke Robert Krämer, in 68 g Toluol gelöst. Man erhält eine Toluol-Tiefdruckfarbe, mit der auf einem Dürner Tiefdruck Handandruckgerät Tiefdruckpapiere türkisblau bedruckt werden können. Die Druckfarbe weist bereits ein recht guten

0211323

Durchschlagsverhalten auf. Lediglich auf sehr leichten Papieren wird ein gegenüber ausschließlich mit Hilfe von Pigmenten hergestellten Druckfarben gleicher Viskosität ein etwas schlechteres Durchschlagsverhalten gefunden.

Zu Druckfarbstoffen mit ähnlichen Eigenschaften gelangt man, wenn man das in Absatz 1 genannte Propanolamin durch äquimolare Mengen von Ethanolamin, Butanolamin oder Diethylamin, bzw. das in Absatz 1 verwendete 2-Ethylhexylamin durch äquimolekulare Mengen von Dodecylamin, Oleylamin, 3-Amino-5-methyl-1-phenylhexan oder 2'-Ethylhexoxypropylamin bzw. die dort genannte Ölsäure durch Undecylensäure, Laurinsäure, Myristinsäure, Palmitinsäure oder Stearinsäure ersetzt.

Patentansprüche

1. Verfahren zur Herstellung von Illustrationstiefdruckfarben, dadurch gekennzeichnet, daß man Phthalocyaninfarbstoffe der Formel

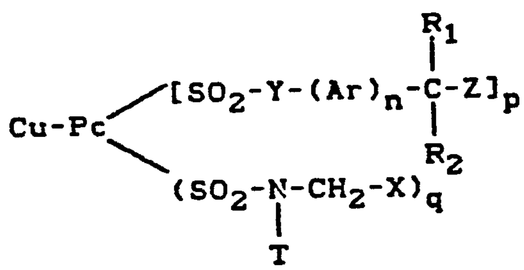

I

verwendet,

in der

Cu-Pc Kupferphthalocyanin

Y 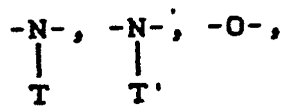

Z für den Fall, daß Y = -O- ist, einen gegebenenfalls substituierten Kohlenwasserstoffrest mit 1 bis 20 C-Atomen, und für den Fall, daß Y = 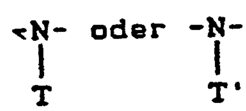 ist, einen gegebenenfalls substituierten aliphatischen Rest mit 1 bis 20 C-Atomen, wobei die für Z genannten Reste frei von wasserlöslich machenden Gruppen, insbesondere frei von Carboxylat- und Sulfonatgruppen sind und ihre Kohlenstoffkette durch -O-, -O-CO-, -NH-CO-, $-NH-SO_2-$ unterbrochen sein kann,

T,T' Wasserstoff, $C_1$-$C_4$-Alkyl, Hydroxy-$C_1$-$C_4$-alkyl,

X einen gegebenenfalls substituierten aliphatischen Rest mit 1 bis 20 C-Atomen, der frei von wasserlöslich machenden Gruppen, insbesondere frei von Carboxylat- und Sulfonatgruppen ist, und dessen Kohlenstoffkette durch -O-, -O-CO-, -NH-CO-, $-NH-SO_2-$ unterbrochen sein kann,

p 2 bis 4, vorzugsweise 2 oder 3, bzw. 2 bis 3,

n, q 0 bis 1,

$R_1$, $R_2$ Wasserstoff, Methyl, Ethyl bezeichnen, mit der Maßgabe, daß, falls Y für $-\underset{T}{\underset{|}{N}}-$ oder $-\underset{T'}{\underset{|}{N}}-$ steht und n = 0 ist, $R_1$ = $R_2$ = Wasserstoff sein müssen.

2. Verfahren gemäß Anspruch 1, dadurch gekennzeichnet, daß man Verbindungen der Formel

$$Cu\text{-}Pc\text{-}(SO_2\text{-}\underset{T}{\underset{|}{N}}\text{-}CH_2\text{-}Z_1)_p \qquad II$$

in der

$Z_1$ $C_6$-$C_{20}$-Alkyl bedeutet, verwendet.

3. Verfahren gemäß Anspruch 1, dadurch gekennzeichnet, daß man Verbindungen der Formel:

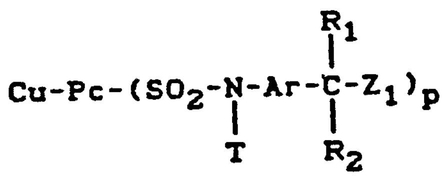

III

in der

$Z_1$ $C_6$-$C_{20}$-Alkyl bezeichnet, verwendet.

4. Verfahren gemäß Anspruch 1, dadurch gekennzeichnet, daß man Verbindungen der Formel:

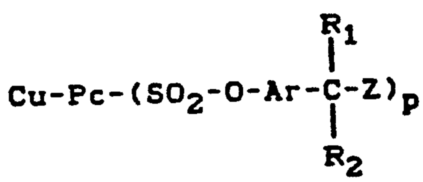

IV

verwendet.

5. Verfahren gemäß Anspruch 1, dadurch gekennzeichnet, daß man Verbindungen der Formel:

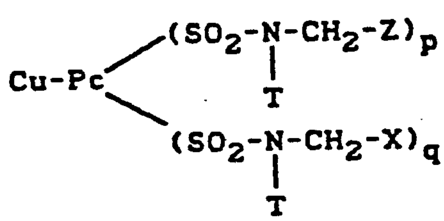

(V)

verwendet.

6. Verfahren gemäß Anspruch 1, dadurch gekennzeichnet, daß man Verbindungen der Formel:

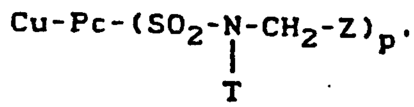

(VI)

in der p' 2 oder 3, bzw. 2 bis 3 bezeichnet, verwendet.

7. Verfahren gemäß Anspruch 1, dadurch gekennzeichnet, daß man Verbindungen der Formel

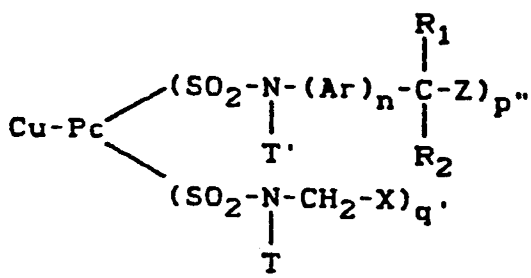

(VII)

in der

p" 2 bis 2,8 und
q' 0,2 bis 1 bezeichnen, verwendet.

0211323

8. Verfahren gemäß Anspruch 1, dadurch gekennzeichnet, daß man Verbindungen der Formel

$$Cu\text{-}Pc\text{-}(SO_2\text{-}O\text{-}Ar\text{-}\overset{\displaystyle R_1}{\underset{\displaystyle R_2}{\overset{|}{\underset{|}{C}}}}\text{-}Z)_{p'} \qquad (VIII)$$

in der p' 2 oder 3, bzw. 2 bis 3 bezeichnet, verwendet.

9. Verfahren gemäß den Ansprüchen 1 bis 8, dadurch gekennzeichnet, daß man Phthalocyaminfarbstoff-Pigment-Gemische verwendet.

10. Verfahren gemäß den Ansprüchen 1 bis 9 zur Herstellung von Illustrationstiefdruckfarben auf Toluolbasis.